(19) Europäisches Patentamt
European Patent Office
Office européen des brevets

(11) **EP 3 123 021 B1**

(12) **EUROPÄISCHE PATENTSCHRIFT**

(45) Veröffentlichungstag und Bekanntmachung des Hinweises auf die Patenterteilung:
**14.03.2018 Patentblatt 2018/11**

(51) Int Cl.:
***F02M 21/02*** *(2006.01)*     ***F16K 31/06*** *(2006.01)*

(21) Anmeldenummer: **15703253.3**

(22) Anmeldetag: **29.01.2015**

(86) Internationale Anmeldenummer:
**PCT/EP2015/051823**

(87) Internationale Veröffentlichungsnummer:
**WO 2015/144341 (01.10.2015 Gazette 2015/39)**

(54) **ELEKTROMAGNETISCH BETÄTIGBARES GASVENTIL SOWIE VERFAHREN ZUR ERHÖHUNG DER DICHTIGKEIT EINES ELEKTROMAGNETISCH BETÄTIGBAREN GASVENTILS**

ELECTROMAGNETICALLY ACTUATABLE VALVE AND METHOD FOR INCREASING THE TIGHTNESS OF AN ELECTROMAGNETICALLY ACTUATABLE VALVE

SOUPAPE À COMMANDE ÉLECTROMAGNÉTIQUE ET PROCEDE D'AUGMENTATION DU DEGRÉ D'ÉTANCHÉITÉ D'UNE SOUPAPE À COMMANDE ÉLECTROMAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.03.2014 DE 102014205496**

(43) Veröffentlichungstag der Anmeldung:
**01.02.2017 Patentblatt 2017/05**

(73) Patentinhaber: **Robert Bosch GmbH**
**70442 Stuttgart (DE)**

(72) Erfinder:
• **WINKLER, Bernd**
**A-4490 St. Florian (AT)**
• **PLOECKINGER, Andreas**
**A-4623 Gunskirchen (AT)**
• **GERSTMAYR, Johannes**
**A-4202 Hellmonsödt (AT)**
• **NADER, Manfred**
**A-4209 Engerwitzdorf (AT)**
• **ZEHETNER, Christian**
**A-4040 Linz (AT)**

(56) Entgegenhaltungen:
**EP-A2- 2 383 457     GB-A- 2 334 552**
**US-A- 5 398 724      US-A- 6 112 765**

EP 3 123 021 B1

**Beschreibung**

Die Erfindung betrifft ein elektromagnetisch betätigbares Gasventil zum Eindosieren eines gasförmigen Brennstoffs in einen Ansaugtrakt eines Motors, insbesondere eines Gas- oder Diesel-Gas-Motors, mit den Merkmalen des Oberbegriffs des Anspruchs 1. Ferner betrifft die Erfindung ein Verfahren zur Erhöhung der Dichtigkeit eines elektromagnetisch betätigbaren Gasventils mit den Merkmalen des Oberbegriffs des Anspruchs 8.

Stand der Technik

Elektromagnetisch betätigbare Gasventile zum Einblasen von gasförmigen Brennstoffen in einen Ansaugtrakt eines Motors sind allgemein bekannt. Der Einsatz solcher Ventile kann dabei in der Weise erfolgen, dass sie zu einer zentralen Einblaseinheit zur Versorgung mehrerer Zylinder des Motors mit gasförmigem Brennstoff zusammengefasst werden (central gas injection - "CGI") oder für jeden Zylinder mindestens ein separates Gasventil vorgesehen wird (multi point injection - "MPI").

Ein gattungsgemäßes Gasventil geht beispielsweise aus der Offenlegungsschrift DE 199 05 721 A1 hervor. Um bei gleichzeitig kurzen Schalt- und Ansprechzeiten einen großen Durchlassquerschnitt bereitzustellen, wird in dieser Druckschrift ein Gasventil vorgeschlagen, das als Flachsitzventil ausgebildet ist. Es besitzt einen ebenen Ventilsitz und ein Dichtelement mit zumindest einer, dem Ventilsitz zugewandten ebenen Dichtfläche. Diese Konstruktion soll Ventilquerschnitte von bis zu mehreren 100 mm$^2$ ermöglichen, die sich bei zugleich kleinen Schaltzeiten verlässlich schalten lassen sollen. Der Ventilsitz wird dabei bevorzugt durch zumindest zwei konzentrische Dichtleisten gebildet, die einen ringförmigen Durchtrittsquerschnitt definieren, der durch ein vorzugsweise ringförmiges Dichtelement abdeckbar ist. Mehrere ringförmige Durchtrittsquerschnitte des Ventilsitzes sind vorzugsweise durch mehrere Umfangsstege des Dichtelements abdeckbar, von denen zumindest je zwei durch zumindest einen radialen Steg miteinander verbunden sind. Die sich dadurch ergebende Gitterstruktur des Dichtelements soll eine ausreichende mechanische Festigkeit gewährleisten. Um darüber hinaus Verformungen durch auf das Dichtelement einwirkende Kräfte des Öffnungs- und Schließsystems entgegen zu wirken, ist ferner vorgesehen, dass die Öffnungs- und Schließkräfte über einen Stempel auf das Dichtelement übertragen werden. Der Stempel soll eine großflächige Krafteinleitung bewirken und dadurch Verformungsmomente verhindern, so dass die Dichtwirkung sichergestellt ist.

Aus der Offenlegungsschrift GB 2 334 552 A ist ein weiteres Gasventil bekannt. Ausgehend von dem vorstehend genannten Stand der Technik liegt der vorliegenden Erfindung die Aufgabe zugrunde, ein Gasventil mit optimaler Dichtwirkung anzugeben bzw. die Dichtigkeit eines Gasventils zu verbessern. Das Gasventil soll zum Eindosieren eines gasförmigen Brennstoffs in einen Ansaugtrakt eines Motors, insbesondere eines Gas- oder Diesel-Gas-Motors, geeignet sein. Unter "Diesel" werden dabei auch dieselähnliche Kraftstoffe, wie beispielsweise Schweröl, Diesel in Marinequalität und/oder Kerosin, verstanden.

Zur Lösung der Aufgabe werden das Gasventil mit den Merkmalen des Anspruchs 1 sowie das Verfahren mit den Merkmalen des Anspruchs 8 vorgeschlagen. Vorteilhafte Weiterbildungen der Erfindung sind den jeweiligen Unteransprüchen zu entnehmen.

Offenbarung der Erfindung

Das zum Eindosieren eines gasförmigen Brennstoffs in einen Ansaugtrakt eines Motors, insbesondere eines Gas- oder Diesel-Gas-Motors, vorgeschlagene elektromagnetisch betätigbare Gasventil umfasst einen als Flachsitz ausgebildeten Ventilsitz, der zur Begrenzung kreis- oder teilkreisförmiger Durchströmöffnungen mehrere konzentrisch angeordnete, ringförmige Stege besitzt. Die mehreren konzentrisch angeordneten, ringförmigen Stege sind dabei über wenigstens einen radial verlaufenden Steg verbunden. Ferner umfasst das Gasventil einen mit dem Ventilsitz dichtend zusammenwirkenden, beweglichen Ventilteller, der mehrere konzentrisch angeordnete, ringförmige Dichtstege besitzt, die in Überdeckung mit den kreis- oder teilkreisförmigen Durchströmöffnungen des Ventilsitzes bringbar sind, um die Durchströmöffnungen zu verschließen. Um die Dichtigkeit des Gasventils in Schließstellung zu erhöhen, wird erfindungsgemäß vorgeschlagen, dass die Steifigkeit des Ventilsitzes und/oder des Ventiltellers in radialer Richtung im Wesentlichen gleich bleibend ist, wobei die Steifigkeit des Ventilsitzes größer als die Steifigkeit des Ventiltellers ist.

Die vorgeschlagene gleich bleibende Steifigkeit des Ventilsitzes und/oder des Ventiltellers in radialer Richtung wirkt Verformungen entgegen, welche die Dichtwirkung des Gasventils beeinträchtigen könnten. "In radialer Richtung" bedeutet hierbei, dass jeder Steg und/oder jeder Dichtsteg im Wesentlichen die gleiche Steifigkeit besitzt, so dass Steifigkeitssprünge von Dichtsitz zu Dichtsitz vermieden werden. Denn jeder ringförmige Steg des Ventilsitzes bildet jeweils einen Dichtsitz für einen ringförmigen Dichtsteg des Ventiltellers aus.

Die konzentrische Anordnung der Stege bzw. Dichtstege, die über einen oder mehrere radial verlaufende Stege verbunden sind, bringt es mit sich, dass ein radial außen liegender Steg bzw. Dichtsteg - aufgrund seiner Bogenlänge - weniger steif als ein radial innen liegender Steg bzw. Dichtsteg ist und damit eher zu Verformungen neigt. Derartigen Verformungen gilt es jedoch entgegen zu wirken, um die Dichtigkeit und damit die Funktion des Gasventils zu gewährleisten.

Derartigen Verformungen einzelner Stege und/oder Dichtstege wird entgegen gewirkt, wenn entsprechend der Erfindung keine Steifigkeitssprünge zwischen den Dichtsitzen gegeben sind. Auf diese Weise wird die Dichtigkeit im Bereich der Dichtsitze erhöht, wodurch in der Folge auch die Funktionssicherheit des Gasventils steigt. Die Dichtwirkung im Bereich der Dichtsitze des Ventilsitzes wird weiter verbessert, wenn ferner erfindungsgemäß die Steifigkeit des Ventilsitzes größer als die des Ventiltellers ist. Diese Maßnahme trägt darüber hinaus zu einer Reduzierung der bewegten Masse bei.

Um eine im Wesentlichen gleich bleibende Steifigkeit des Ventilsitzes und/oder des Ventiltellers in radialer Richtung zu erreichen wird gemäß einer bevorzugten Ausführungsform der Erfindung vorgeschlagen, dass die Querschnittsfläche eines radial außen liegenden Stegs größer als die eines radial innen liegenden Stegs und/oder die Querschnittsfläche eines radial außen liegenden Dichtstegs größer als die eines radial innen liegenden Dichtstegs ist. Da der Ventilsitz als Flachsitz ausgebildet ist, kann die Vergrößerung der Querschnittsfläche eines Stegs bzw. eines Dichtstegs nur in einer vom Flachsitz abgewandten Richtung, beispielsweise durch Vergrößerung der Höhe h erfolgen, welche der axialen Erstreckung eines Stegs bzw. Dichtstegs entspricht. Mit Vergrößerung der Querschnittsfläche steigt auch die Steifigkeit eines einen Dichtsitz ausbildenden Stegs bzw. eines mit dem Dichtsitz zusammenwirkenden Dichtstegs. Die Vergrößerung der Querschnittsfläche sollte dabei in dem Maße erfolgen, dass Steifigkeitssprünge zwischen den Dichtsitzen verhindert werden.

Bei der Dimensionierung der Querschnittsfläche der Stege bzw. Dichtstege wird vorzugsweise eine analytische Näherungsformel für einen beidseits eingespannten Träger mit Streckenlast (Bernoulli-Euler Balken) zugrunde gelegt:

$$y_m = \frac{q\, l^4}{384\, E\, I}$$

Dabei ist "q" die Streckenlast, "l" die freie Länge, "*E*" der Elastizitätsmodul und "*I*" das Flächenträgheitsmoment. Hieraus lässt sich die maximale Durchbiegung $y_{mmax}$ ermitteln.

Bei gegebener maximaler Durchbiegung $y_{mmax}$, gegebener Druckbelastung p und gegebener Balkenbreite b errechnet sich hieraus die Streckenlast nach folgender Formel:

$$q = p\, b$$

Die erforderliche Balkenhöhe $h_{erf}$ ergibt sich dann aus der Formel:

$$h_{erf} = \sqrt[3]{\frac{p\, l^4}{32\, E\, y_{mmax}}}$$

In einer nicht erfindungsgemäßen Ausgestaltung besitzt bzw. besitzen zumindest ein Steg des Ventilsitzes und/oder ein Dichtsteg des Ventiltellers einen rechteckigen Querschnitt. Ein rechteckiger Querschnitt ist einfacher herstellbar und vereinfacht auf diese Weise die Fertigung des Ventilsitzes bzw. des Ventiltellers. Zudem lässt sich eine Vergrößerung der Querschnittsfläche leicht durch eine Veränderung der Höhe h realisieren.

Erfindungsgemäß wird vorgeschlagen, dass zumindest ein Steg des Ventilsitzes und/oder ein Dichtsteg des Ventiltellers einen im Wesentlichen L-, T- oder U-förmigen Querschnitt besitzt bzw. besitzen. Durch einen im Wesentlichen L- oder U-förmigen Querschnitt kann insbesondere die Torsionssteifigkeit eines Stegs bzw. eines Dichtstegs erhöht werden.

Dabei bildet ein erster Schenkel eines im Wesentlichen L-, T- oder U-förmigen Querschnitts eine Sitz- oder Dichtfläche aus, während wenigstens ein zweiter Schenkel, der vorzugsweise mit dem ersten Schenkel einen rechten Winkel umschließt, eine Aussteifung des ersten Schenkels bewirkt. Um die Steifigkeit eines Stegs und/oder Dichtstegs zu verändern, muss dann lediglich die Höhe h des der Aussteifung dienenden zweiten Schenkels verändert werden, während die Abmessungen des ersten Schenkels unverändert bleiben können.

Gemäß einer bevorzugten Ausgestaltung der Erfindung ist der zweite Schenkel eines im Querschnitt L-förmigen Stegs bzw. Dichtstegs auf der der Sitz- bzw. Dichtfläche abgewandten Seite radial außen in Bezug auf die radiale Erstreckung des ersten Schenkels angeordnet. Durch diese Maßnahme wird der Schubmittelpunkt vom Zentrum des Querschnitts in Richtung der Mittelachse des Ventilsitzes bzw. des Ventiltellers verschoben, wodurch eine unerwünschte Verdrehung des Stegs bzw. des Dichtstegs nach außen kompensiert werden kann.

Vorteilhafterweise sind die Stege des Ventilsitzes über mehrere radial verlaufende Stege verbunden. Da die radial verlaufenden Stege zugleich eine Abstützung bewirken, kann auf diese Weise die Steifigkeit der einzelnen ringförmigen Stege erhöht werden. Um dabei eine möglichst gleich bleibende Steifigkeit in Umfangsrichtung zu erzielen, sind vorzugsweise die mehreren radial verlaufenden Stege in gleichem Winkelabstand zueinander angeordnet.

Darüber hinaus wird vorgeschlagen, dass die Dichtstege des Ventiltellers ebenfalls über wenigstens einen radial verlaufenden Steg verbunden sind. Vorzugsweise sind mehrere radial verlaufende Stege vorgesehen, die weiterhin vorzugsweise - aus den vorstehend bereits genannten Gründen - in gleichem Winkelabstand zueinander angeordnet sind.

Zur Lösung der eingangs genannten Aufgabe wird ferner ein Verfahren zur Erhöhung der Dichtigkeit eines elektromagnetisch betätigbaren Gasventils vorgeschlagen. Bei dem Gasventil handelt es sich um ein solches, das einen als Flachsitz ausgebildeten Ventilsitz umfasst, der zur Begrenzung kreis- oder teilkreisförmiger Durchströmöffnungen mehrere konzentrisch angeordnete, ringförmige Stege besitzt, die über wenigstens einen radial verlaufenden Steg verbunden sind. Ferner umfasst das Gasventil einen mit dem Ventilsitz dichtend zusammenwirkenden, beweglichen Ventilteller, der mehrere konzentrisch angeordnete, ringförmige Dichtstege besitzt, die in Überdeckung mit den kreis- oder teilkreisförmigen Durchströmöffnungen des Ventilsitzes bringbar sind. Erfindungsgemäß ist vorgesehen, dass die Steifigkeit des Ventilsitzes und/oder des Ventiltellers in radialer Richtung im Wesentlichen gleich bleibend gewählt wird, wobei die Steifigkeit des Ventilsitzes größer als die Steifigkeit des Ventiltellers gewählt wird. Durch diese beiden Maßnahmen kann die Dichtigkeit des Gasventils deutlich erhöht werden. Denn zum Einen werden Steifigkeitssprünge zwischen den einzelnen Dichtsitzen, die vorliegend durch die ringförmigen Stege des Ventilsitzes ausgebildet werden, verhindert. Zum Anderen kann die Steifigkeit des Ventiltellers optimal auf die Steifigkeit des Ventilsitzes abgestimmt werden. Vorzugsweise bleibt eine gewisse Flexibilität des Ventiltellers erhalten, um eine dichtende Anlage des Ventiltellers am Ventilsitz sicherzustellen.

Gemäß einer bevorzugten Ausgestaltung des erfindungsgemäßen Verfahrens wird die Querschnittsfläche eines radial außen liegenden Stegs des Ventilsitzes größer als die eines radial innen liegenden Stegs gewählt. Alternativ oder ergänzend kann die Querschnittsfläche eines radial außen liegenden Dichtstegs des Ventiltellers größer als die eines radial innen liegenden Dichtstegs gewählt werden. Die unterschiedlich großen Querschnittsflächen der Stege und/oder Dichtstege in Abhängigkeit von ihrer jeweiligen radialen Lage ermöglichen die Steifigkeit eines Stegs bzw. Dichtstegs den jeweiligen Gegebenheiten anzupassen, so dass keine Steifigkeitssprünge zwischen den Dichtsitzen gegeben sind.

Ein Steg oder Dichtsteg kann - entsprechend dem zuvor beschriebenen erfindungsgemäßen Gasventil - im Querschnitt rechteckig oder im Wesentlichen L-, T- oder U-förmig ausgebildet werden. Die im Wesentlichen L- oder U-förmige Ausbildung wirkt insbesondere einer Torsion eines Stegs des Ventilsitzes bzw. eines Dichtstegs des Ventiltellers entgegen.

Das vorgeschlagene Verfahren führt insbesondere zu dem zuvor beschriebenen erfindungsgemäßen Gasventil, so dass hinsichtlich weiterer bevorzugter Ausgestaltungsmerkmale auf die vorstehenden Ausführungen verwiesen werden kann.

Nachfolgend wird die Erfindung anhand der beigefügten Zeichnungen (Figuren 1 bis 7), die bevorzugte Ausführungsformen der Erfindung betreffen, näher erläutert. Es zeigen:

Figur 1 einen Längsschnitt durch ein Gasventil der erfindungsgemäßen Art,

Figur 2 eine perspektivische Darstellung eines Ventilsitzes eines bekannten Gasventils,

Figur 3 eine perspektivische Darstellung eines Ventiltellers eines bekannten Gasventils,

Figur 4 eine perspektivische Schnittansicht durch Ventilsitz und Ventilteller eines bekannten Gasventils,

Figur 5 eine perspektivische Schnittansicht durch Ventilsitz und Ventilteller eines nicht erfindungsgemäßen Gasventils,

Figur 6 eine perspektivische Schnittansicht durch Ventilsitz und Ventilteller eines erfindungsgemäßen Gasventils gemäß einer ersten bevorzugten Ausführungsform und

Figur 7 eine perspektivische Schnittansicht durch Ventilsitz und Ventilteller eines erfindungsgemäßen Gasventils gemäß einer zweiten bevorzugten Ausführungsform.

Ausführliche Beschreibung der Figuren

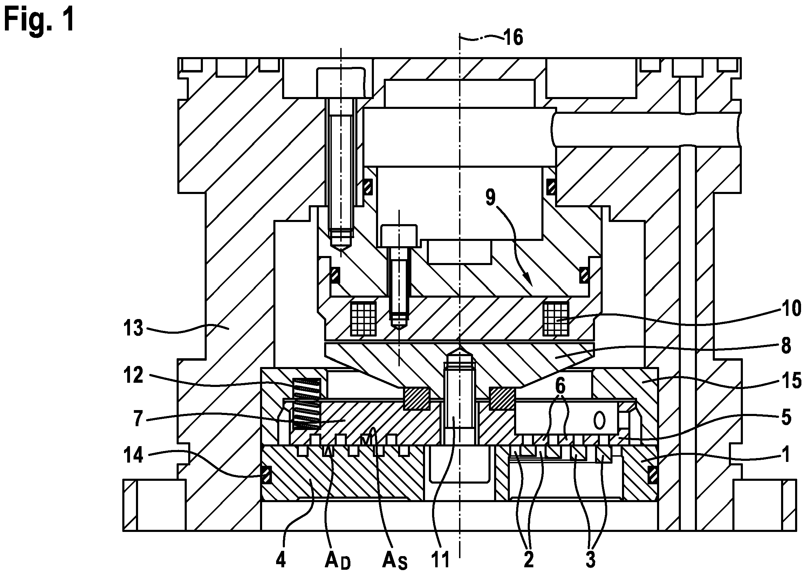

Das in der Figur 1 im Längsschnitt dargestellte Gasventil weist ein Ventilgehäuse 13 auf, in dem ein plattenförmiger Körper zur Ausbildung eines Ventilsitzes 1 eingesetzt ist. Der Ventilsitz 1 wird aus mehreren konzentrisch angeordneten, ringförmigen Stegen 3 gebildet, die über radial verlaufende Stege 4 derart verbunden sind, dass zwischen den Stegen 3 und 4 teilkreisförmige Durchströmöffnungen 2 ausgebildet werden. Auf diese Weise bildet jeder Steg 3 einen Dichtsitz mit einer Sitzfläche $A_S$ aus, der mit einer Dichtfläche $A_D$ eines ringförmigen Dichtstegs 6 eines beweglich im Ventilgehäuse 13 aufgenommenen Ventiltellers 5 dichtend zusammenwirkt, wenn das Gasventil schließt und die mehreren konzentrisch angeordneten, ringförmigen Dichtstege 6 des Ventiltellers 5 in Überdeckung mit jeweils einer teilkreisförmigen Durchströmöffnung 2 des Ventilsitzes 1 gebracht werden.

Im Ventilgehäuse 13 ist ferner eine Magnetbaugruppe 9 mit einer Magnetspule 10 zur Betätigung des Gasventils aufgenommen. Die Magnetbaugruppe 9 wirkt hierbei mit einem hubbeweglichen Anker 8 zusammen, der über einen Ankerstift 11 mit dem Ventilteller 5 wirkverbunden ist. Wird die Magnetspule 10 der Magnetbaugruppe 9 bestromt, baut sich ein Magnetfeld auf, das eine Hubbewegung des Ankers 8 in Richtung der Magnetspule 10 bewirkt. Aufgrund der Verbindung über den Ankerstift 11 führt dabei der Anker 8 den Ventilteller 5 entgegen der Federkraft einer Schließfeder 12 mit. Das Gasventil öffnet. Der maximale Hub des Ankers 8 bzw. des Ventiltellers 5 ist durch eine im Ventilgehäuse 13 aufgenommene Anschlagplatte 15 vorgegeben.

Wird die Bestromung der Magnetspule 10 beendet, stellt die Federkraft der Schließfeder 12 den Ventilteller 5 in seine Ausgangslage zurück. Aufgrund der Verbindung über den Ankerstift 11 wird diesmal der Anker 8 mitgeführt, der auf diese Weise ebenfalls in seine Ausgangslage zurückgestellt wird. Die Federkraft der Schließfeder 12 drückt den Ventilteller 5 gegen den Ventilsitz 1, so dass die Dichtflächen $A_D$ der Dichtstege 6 des Ventiltellers 5 dichtend an den Sitzflächen $A_S$ der Stege 3 des Ventilsitzes 1 anliegen und die Dichtstege 6 des Ventiltellers 5 die Durchströmöffnungen 2 des Ventilsitzes 1 verschließen.

Um die Dichtigkeit im Bereich des Ventilsitzes 1 zu erhöhen, weist der Ventilteller 5 eine geringere Steifigkeit als der Ventilsitz 1 auf. Ferner weisen die Stege 3 des Ventilsitzes 1 unterschiedliche Querschnittsflächen auf, um Steifigkeitssprünge zwischen den einzelnen Dichtsitzen des Ventilsitzes 1 zu verhindern.

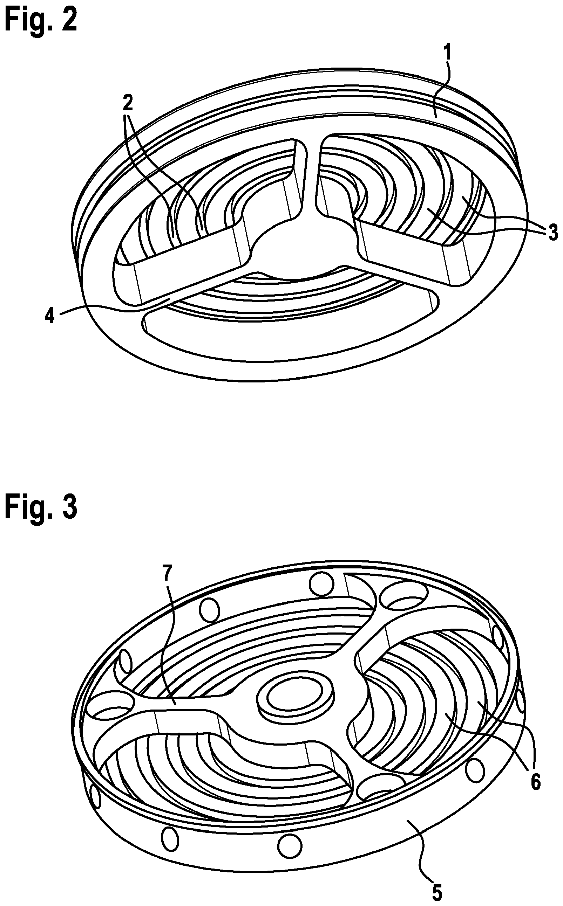

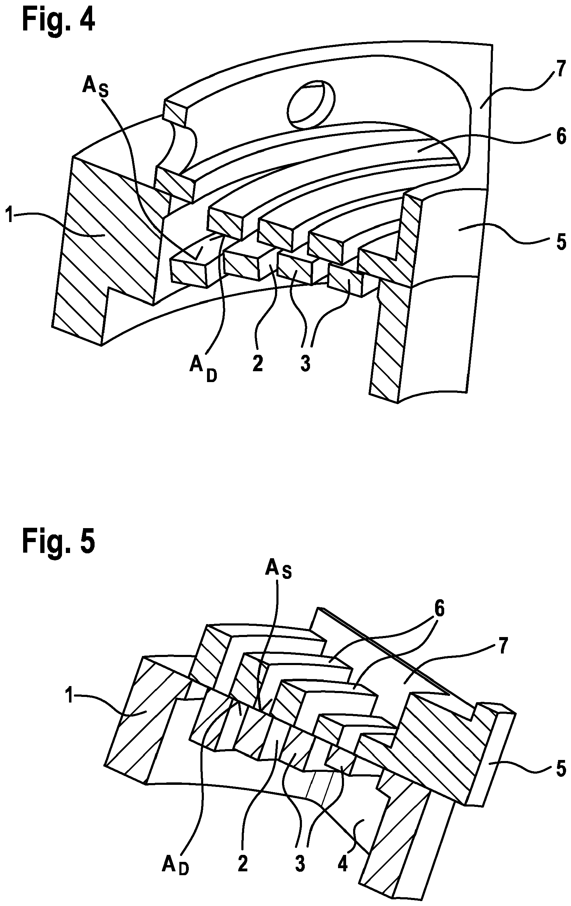

Wie der Figur 1 zu entnehmen ist nimmt die Querschnittsfläche der Stege 3 des Ventilsitzes 1 mit ihrem radialen Abstand zu einer Mittelachse 16 des Gasventils zu. Insoweit unterscheidet sich der Ventilsitz 1 des Gasventils der Figur 1 von einem herkömmlichen Ventilsitz 1, wie er beispielhaft in der Figur 2 dargestellt ist. Denn bei einem herkömmlichen Ventilsitz 1 weisen die Stege 3 jeweils gleiche Querschnittsflächen auf. Da mit ihrem Abstand zur Mittelachse 16 auch die Bogenlänge eines Stegs 3 zunimmt, wobei die Bogenlänge der Länge eines Stegs 3 zwischen zwei radial verlaufenden Stegen 4 entspricht, nimmt dementsprechend die Steifigkeit eines Stegs 3 ab. Der Ventilsitz 1 eines herkömmlichen Gasventils weist somit Steifigkeitssprünge zwischen den einzelnen Dichtsitzen auf, so dass insbesondere die radial außen liegenden Stege 3 zu Verformungen neigen, wie dies beispielhaft in der Figur 4 dargestellt ist. Eine dichtende Anlage der Dichtflächen $A_D$ an den Sitzflächen As ist in diesem Fall nicht gewährleistet. Dies gilt insbesondere, da auch die Dichtstege 6 eines herkömmlichen Ventiltellers 5, wie er beispielhaft in der Figur 3 dargestellt ist, zu derartigen Verformungen neigen.

Wie der Figur 3 zu entnehmen ist, können auch die Dichtstege 6 des Ventiltellers 5 über radial verlaufende Stege 7 miteinander verbunden sein. Der dargestellte Ventilteller 5 weist vorliegend drei radial verlaufende Stege auf, die in gleichem Winkelabstand zueinander angeordnet sind. Gleiches gilt für den in der Figur 2 dargestellten bekannten Ventilsitz 1. Durch die radial verlaufenden Stege 4, 7 kann die Steifigkeit eines Stegs 3 bzw. eines Dichtstegs 6 erhöht werden, da durch eine Erhöhung der Anzahl der Stege 4, 7 die Bogenlänge der Stege 3 bzw. der Dichtstege 6 verkürzt wird.

Die Steifigkeit eines Stegs 3 des Ventilsitzes 1 und/oder eines Dichtstegs 6 des Ventiltellers 5 kann demnach von verschiedenen Faktoren abhängen. Diesen Faktoren kann insbesondere dadurch Rechnung getragen werden, dass die Querschnittsfläche eines Stegs 3 und/oder eines Dichtstegs 6 entsprechend angepasst wird.

Bei dem Ausführungsbeispiel der Figur 1 weisen die Stege 3 mit zunehmendem Abstand zur Mittelachse 16 eine vergrößerte Querschnittsfläche auf. Die Vergrößerung der Querschnittsfläche wird dadurch bewirkt, dass die Gesamthöhe der Stege 3 jeweils mit ihrem radialen Abstand zur Mittelachse 16 zunimmt. Dabei ist die Höhe derart bemessen, dass die Stege 3 in radialer Richtung eine im Wesentlichen gleich bleibende Steifigkeit aufweisen und Steifigkeitssprünge von Dichtsitz zu Dichtsitz vermieden werden.

Um einer Verformung der Dichtstege 6 des Ventiltellers 5 entgegen zu wirken, können diese entsprechend den Stegen 3 des Ventilsitzes 1 ausgebildet sein. Diese nicht erfindungsgemäße Ausführungsform ist beispielhaft in der Figur 5 dargestellt.

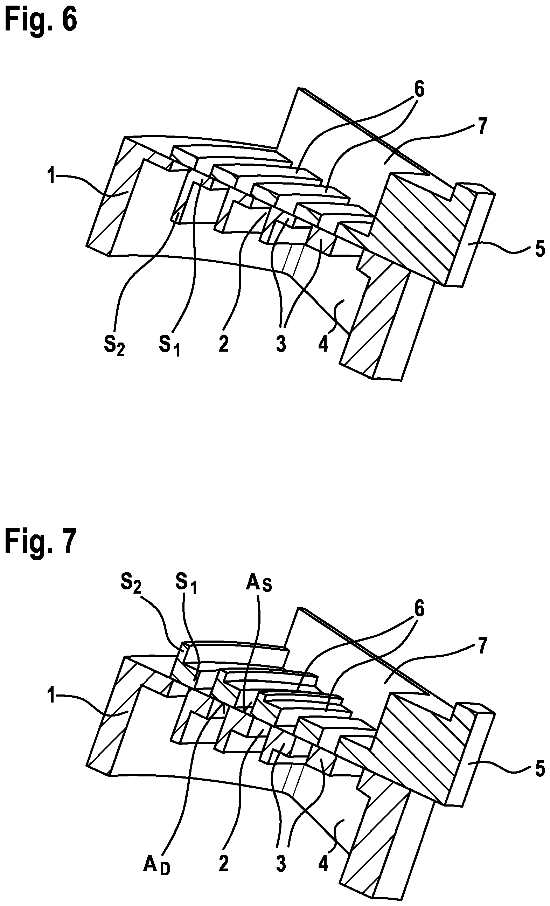

Alle oder einzelne Stege 3 und/oder Dichtstege 6 können einen L-förmigen Querschnitt aufweisen, wie dies beispielhaft in den Figuren 6 und 7 dargestellt ist. Ein L-förmiger Querschnitt erhöht die Verwindungssteifigkeit. Der L-förmige Querschnitt setzt sich aus einem ersten Schenkel $S_1$ und einem zweiten Schenkel $S_2$ zusammen, welche gemeinsam einen rechten Winkel umschließen. Der zweite Schenkel $S_2$ ist nach radial außen versetzt und jeweils auf der der Sitzfläche $A_S$ bzw. der Dichtfläche $A_D$ abgewandten Seite des ersten Schenkels $S_1$ angeordnet. Um die Querschnittsfläche eines Stegs 3 oder eines Dichtstegs 6 zu verändern, muss lediglich die Höhe des zweiten Schenkels $S_2$ entsprechend verändert werden.

Die Erfindung ist nicht auf die dargestellten Ausführungsformen beschränkt. Vielmehr sind Abwandlungen denkbar, die insbesondere die Anzahl und Ausgestaltung der Stege 3 bzw. der Dichtstege 6 sowie der radial verlaufenden Stege 4 und 7 betreffen. Des Weiteren lassen sich unterschiedliche Querschnitte der Stege 3 und/oder der Dichtstege 6 kombinieren. Das Ziel einer im Wesentlichen gleich bleibenden Steifigkeit des Ventilsitzes 1 und/oder des Ventiltellers 5 in radialer Richtung kann auf unterschiedliche Art und Weise erreicht werden.

Ferner können weitere Maßnahmen ergriffen werden, um die Dichtigkeit eines erfindungsgemäßen Gasventils zu erhöhen. Beispielsweise kann zwischen dem Ventilsitz 1 und dem Ventilgehäuse 13 ein Dichtelement 14 eingelegt sein, um eine Leckage zwischen dem Ventilsitz 1 und dem Ventilgehäuse 13 zu verhindern (siehe Figur 1).

**Patentansprüche**

1. Elektromagentisch betätigbares Gasventil zum Eindosieren eines gasförmigen Brennstoffs in einen Ansaugtrakt eines Motors, insbesondere eines Gas- oder Diesel-Gas-Motors, umfassend einen als Flachsitz ausgebildeten Ventilsitz (1), der zur Begrenzung kreis- oder teilkreisförmiger Durchströmöffnungen (2) mehrere konzentrisch angeordnete, ringförmige Stege (3) besitzt, die über wenigstens einen radial verlaufenden Steg (4) verbunden sind, ferner umfassend einen mit dem Ventilsitz (1) dichtend zusammenwirkenden, beweglichen Ventilteller (5), der mehrere konzentrisch angeordnete, ringförmige Dichtstege (6) besitzt, die in Überdeckung mit den kreis- oder teilkreisförmigen Durchströmöffnungen (2) des Ventilsitzes (1) bringbar sind, **dadurch gekennzeichnet, dass** die Steifigkeit des Ventilsitzes (1) und/oder des Ventiltellers (5) in radialer Richtung im Wesentlichen gleich bleibend ist, wobei die Steifigkeit des Ventilsitzes (1) größer als die Steifigkeit des Ventiltellers (5) ist, wobei zumindest ein Steg (3) des Ventilsitzes (1) und/oder ein Dichtsteg (6) des Ventiltellers (5) einen im Wesentlichen L-, T- oder U-förmigen Querschnitt besitzt bzw. besitzen, und wobei ein erster Schenkel (S1) des im Wesentlichen L-, T- oder U-förmigen Querschnitts eine Sitzfläche (AS) oder eine Dichtfläche (AD) ausbildet und wenigstens ein zweiter Schenkel (S2), der vorzugsweise mit dem ersten Schenkel (S1) einen rechten Winkel umschließt, eine Aussteifung des ersten Schenkels (S1) bewirkt.

2. Gasventil nach Anspruch 1,
   **dadurch gekennzeichnet, dass** die Querschnittsfläche eines radial außen liegenden Stegs (3) größer als die eines radial innen liegenden Stegs (3) und/oder die Querschnittsfläche eines radial außen liegenden Dichtstegs (6) größer als die eines radial innen liegenden Dichtstegs (6) ist.

3. Gasventil nach Anspruch 1,
   **dadurch gekennzeichnet, dass** der zweite Schenkel ($S_2$) auf der der Sitzfläche ($A_S$) oder der Dichtfläche ($A_D$) abgewandten Seite radial außen in Bezug auf die radiale Erstreckung des ersten Schenkels ($S_1$) angeordnet ist.

4. Gasventil nach einem der vorhergehenden Ansprüche,
   **dadurch gekennzeichnet, dass** die Stege (3) des Ventilsitzes (1) über mehrere radial verlaufende Stege (4) verbunden sind, die vorzugsweise in gleichem Winkelabstand zueinander angeordnet sind.

5. Gasventil nach einem der vorhergehenden Ansprüche,
   **dadurch gekennzeichnet, dass** die Dichtstege (6) des Ventiltellers (5) über wenigstens einen radial verlaufenden Steg (7) verbunden sind, wobei vorzugsweise mehrere radial verlaufende Stege (7) vorgesehen sind, die weiterhin vorzugsweise in gleichem Winkelabstand zueinander angeordnet sind.

**Claims**

1. Electromagnetically actuatable gas valve for metering a gaseous fuel into a suction tract of an engine, in particular a gas or diesel/gas engine, comprising a valve seat (1), which is designed as a flat seat and which, to delimit circular or partially circular throughflow openings (2), has a plurality of concentrically arranged annular webs (3), which are connected by at least one radially extending web (4), further comprising a movable valve disk (5), which interacts sealingly with the valve seat (1) and which has a plurality of concentrically arranged annular sealing webs (6), which can be brought into overlap with the circular or partially circular through-flow openings (2) of the valve seat (1), **characterized in that** the stiffness of the valve seat (1) and/or the valve disk (5) is substantially constant in the radial direction, wherein the stiffness of the valve seat (1) is greater than the stiffness of the valve disk (5), wherein at least one web (3) of the valve seat (1) and/or one sealing web (6) of the valve disk (5) has/have a substantially L-, T- or U-shaped cross section, and wherein a first leg (S1) of the substantially L-, T- or U-shaped cross section forms a seat surface (AS) or a sealing surface (AD), and at least one second leg (S2), which preferably encloses a right angle with the first leg (S1), brings about a reinforcement of the first leg (S1).

2. Gas valve according to Claim 1,
   **characterized in that** the cross-sectional area of a web (3) situated radially on the outside is greater than that of a web (3) situated radially on the inside, and/or the cross-sectional area of a sealing web (6) situated radially on the outside is greater than that of a sealing web (6) situated radially on the inside.

3. Gas valve according to Claim 1,
   **characterized in that** the second leg ($S_2$) is arranged radially on the outside with respect to the radial extent of the first leg ($S_1$), on the side facing away from the seat surface ($A_S$) or the sealing surface ($A_D$).

4. Gas valve according to one of the preceding claims,
   **characterized in that** the webs (3) of the valve seat (1) are connected by a plurality of radially extending webs (4), which are preferably arranged at equal angular intervals.

5. Gas valve according to one of the preceding claims,
   **characterized in that** the sealing webs (6) of the valve disk (5) are connected by at least one radially extending web (7), wherein a plurality of radially extending webs (7) is preferably provided, which are furthermore preferably arranged at equal angular intervals.

**Revendications**

1. Soupape à gaz à commande électromagnétique destinée à l'injection d'un carburant gazeux dans un système d'admission d'un moteur, en particulier d'un moteur à gaz ou moteur diesel-gaz, comprenant un siège de soupape (1), constitué en tant que siège plat, qui possède des nervures (3) annulaires disposées de façon concentrique pour la limitation d'orifices de passage (2) en forme de cercle ou de cercle partiel qui sont raccordées par le biais d'au moins une nervure (4) qui s'étend radialement, comprenant en outre une tête de soupape (5) mobile qui coopère de façon étanche avec le siège de soupape (1) et qui possède plusieurs nervures d'étanchéité (6) annulaires disposées de façon concentrique qui peuvent être amenées en coïncidence avec les orifices de passage (2) en forme de cercle ou de cercle partiel du siège de soupape (1),
**caractérisée en ce que** la rigidité du siège de soupape (1) et/ou de la tête de soupape (5) dans la direction radiale demeure essentiellement identique, la rigidité du siège de soupape (1) étant supérieure à la rigidité de la tête de soupape (5), au moins une nervure (3) du siège de soupape (1) et/ou une nervure d'étanchéité (6) de la tête de soupape (5) possédant une section transversale essentiellement en forme de L, de T ou de U, et une première branche (S1) de la section transversale essentiellement en forme de L, de T ou de U constituant une surface d'assise (AS) ou une surface d'étanchéité (AD), et au moins une deuxième branche (S2), qui forme de préférence un angle droit avec la première banche (S1), provoquant un raidissement de la première branche (S1).

2. Soupape à gaz selon la revendication 1,
**caractérisée en ce que** la surface de section transversale d'une nervure (3) située radialement à l'extérieur est plus grande que celle d'une nervure (3) située radialement à l'intérieur, et/ou la surface de section transversale d'une nervure d'étanchéité (6) située radialement à l'extérieur est plus grande que celle d'une nervure d'étanchéité (6) située radialement à l'intérieur.

3. Soupape à gaz selon la revendication 1,
**caractérisée en ce que** la deuxième branche ($S_2$) est disposée sur le côté éloigné de la surface d'assise ($A_S$) ou de la surface d'étanchéité ($A_D$), à l'extérieur radialement par rapport à l'étendue radiale de la première branche ($S_1$).

4. Soupape à gaz selon l'une des revendications précédentes,
**caractérisée en ce que** les nervures (3) du siège de soupape (1) sont raccordées par le biais de plusieurs nervures (4) s'étendant radialement qui sont de préférence disposées avec une même distance angulaire les unes par rapport aux autres.

5. Soupape à gaz selon l'une des revendications précédentes,
**caractérisée en ce que** les nervures d'étanchéité (6) de la tête de soupape (5) sont raccordées par le biais d'au moins une nervure (7) s'étendant radialement, plusieurs nervures (7) s'étendant radialement étant de préférence prévues, qui sont en outre de préférence disposées avec une même distance angulaire les unes par rapport aux autres.

# Fig. 1

# Fig. 2

# Fig. 3

**Fig. 4**

**Fig. 5**

**Fig. 6**

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19905721 A1
- GB 2334552 A